# EUROPÄISCHE PATENTSCHRIFT

(11) **EP 1 155 097 B1**
(45) Veröffentlichungstag und Bekanntmachung des Hinweises auf die Patenterteilung: **12.01.2005**
(21) Anmeldenummer: 00909198.4
(22) Anmeldetag: 17.02.2000
(51) Int. Cl.: C09K 19/00, C09D 5/36, C09B 67/00

(54) **CHOLESTERISCHES SCHICHTMATERIAL UND VERFAHREN ZU DESSEN HERSTELLUNG**
CHOLESTERIC LAYERED MATERIAL AND METHOD FOR PRODUCING THE SAME
MATERIAU MULTICOUCHE CHOLESTERIQUE ET SON PROCEDE DE FABRICATION

(30) Priorität: 17.02.1999 DE 19906589
(43) Veröffentlichungstag der Anmeldung: 21.11.2001
(73) Patentinhaber: BASF AKTIENGESELLSCHAFT, 67056 Ludwigshafen (DE)
(72) Erfinder: SCHUHMACHER, Peter, D-68163 Mannheim (DE); SCHNEIDER, Norbert, D-67122 Altrip (DE); RICHTER, Volker, D-69118 Heidelberg (DE); BEST, Wolfgang, D-67251 Freinsheim (DE); KOHL, Albert, D-67229 Laumersheim (DE); BLASCHKA, Peter, D-67069 Ludwigshafen (DE); SIERAKOWSKI, Claudia, D-64347 Griesheim (DE)
(74) Vertreter: Kinzebach, Werner, Dr.
(86) Internationale Anmeldenummer: PCT/EP2000/001303
(87) Internationale Veröffentlichungsnummer: WO 2000/049105

(56) Entgegenhaltungen:
- EP-A- 0 872 336
- DE-A- 19 738 368

## Beschreibung

Die Erfindung betrifft cholesterisches Schichtmaterial, mehrschichtige cholesterische Effektpigmente, Verfahren zu deren Herstellung und deren Verwendung.

Cholesterisches Schichtmaterial mit der Schichtfolge A¹/B/A², wobei A¹ und A² gleich oder verschieden sind und jeweils mindestens eine cholesterische Schicht umfassen, und B für mindestens eine die Schichten A¹ und A² voneinander trennende Zwischenschicht steht, sowie entsprechend aufgebaute cholesterische Mehrschichtpigmente sind aus DE-A-197 38 368.8, DE-A-197 38 369.6, DE-A-197 57 699.0 sowie aus PCT/EP98/05544 und PCT/EP98/05545 bekannt. Auf die Offenbarung dieser Anmeldungen wird hiermit ausdrücklich Bezug genommen.

Die Aufgabe der vorliegenden Erfindung bestand in der Bereitstellung ähnlich aufgebauter cholesterischer Schichtstrukturen, welche durch Kaschierung herstellbar sein sollen.

Gelöst wurde diese Aufgabe durch Bereitstellung von cholesterischem Schichtmaterial der eingangs bezeichneten Art mit der Schichtfolge A¹/B/A², wobei A¹ und A² gleich oder verschieden sind und jeweils mindestens eine gehärtete orientierte cholesterische Schicht umfassen, und B für mindestens eine die Schichten A¹ und A² voneinander trennende Zwischenschicht steht, dadurch gekennzeichnet, dass die Schicht B eine Klebeschicht ist; wobei des Schichtmaterial durch Kaschieren erhältlich ist; und wobei die Haftkraft zwischen Klebeschicht B und den Schichten A¹ beziehungsweise A² mindestens um den Faktor 2 größer ist als die Haftkraft der jeweiligen Schicht A¹ beziehungsweise A² auf dem jeweils zugeordneten Schichtträger, der zur Ausbildung der gehärteten Schichten A¹ und A² verwendet wird.

Insbesondere ist Gegenstand der Erfindung ein cholesterisches Schichtmaterial, dessen Klebeschicht B aus einer wenigsten einen wärme- und/oder druckaktivierbaren Klebstoff umfassenden Masse hergestellt wurde.

Beispiele für geeignete Klebstoffzusätze sind ausgewählt unter lösungsmittelhaltigem Polyurethan, insbesondere Hydroxylpolyester-Polyurethan, lösungsmittelhaltigen Klebstoffen auf der Basis von Ethylen-Vinylacetat-Mischpolymerisat, Polyacrylaten, Polymethacrylsäureestern, Polyisobutenen, lösungsmittelhaltigen Klebstoffdispersionen wie Naturkautschuk, Synthesekautschuk auf Polyvinylacetat- bzw. Polyurethanbasis, Polyvinylalkohol, modifizierter Zellulose sowie Gemischen davon, enthält. Geeignete Klebstoffe sind z.B. beschrieben in Dauerhaft Kleben, Vincentz-Verlag, Hannover, Dr. H.F. Huber. Geeignete Klebstoffe sind z.B. unter den Handelsbezeichnungen Desmocoll 540 und 400 erhältlich.

Insbesondere geeignet sind Klebstoffe, die bei einem Liniendruck im Bereich von 1 bis 30 kg/cm, bevorzugt 2 bis 10 kg/cm, Gießbreite und/oder einer Temperatur im Bereich von 20 bis 120°C, bevorzugt 40 bis 80°C aktivierbar sind.

Gemäß einer bevorzugten Ausführungsform wird cholesterisches Schichtmaterial bereitgestellt, worin die Schichtdicken von A¹ bzw. A² etwa 0,5 bis 20 µm, bevorzugt 1 bis 4 µm betragen; sowie cholesterisches Schichtmaterial dessen Schichtdicke von B etwa 0,3 bis 3 µm, bevorzugt 0,5 bis 1,5 µm beträgt.

Bevorzugt ist außerdem cholesterisches Schichtmaterial, worin die Haftkraft zwischen Klebeschicht B und den Schichten A¹ und A² unabhängig voneinander mindestens um den Faktor 2, bevorzugt mindestens um den Faktor 3, wie z.B. um den Faktor 5, größer ist als die Haftkraft der jeweiligen Schicht A¹ beziehungsweise A² auf dem jeweils zugeordneten Schichtträger.

Gegenstand der Erfindung ist außerdem ein Verfahren zur Herstellung des oben beschriebenen cholesterischem Schichtmaterials mit der Schichtfolge A¹/B/A², wobei das Verfahren durch folgende Schritte gekennzeichnet ist:
a) Auftragen einer die Schicht A¹ bildenden ersten Beschichtungsmasse auf einen ersten Schichtträger mit anschließender Härtung der Schicht A¹;
b) Auftragung einer die Klebeschicht B bildenden und wenigstens einen wärme- und/oder druckaktivierbaren Kleber enthaltenden zweiten Beschichtungsmasse auf die geträgerte Schicht A¹ unter Ausbildung des Schichtverbundes A¹/B;
c) Auftragen einer die Schicht A² bildenden dritten Beschichtungsmasse auf einen zweiten Schichtträger mit anschließender Härtung der Schicht A²;
d) Aufkaschieren von A² auf den Schichtverbund A¹/B durch in Kontakt bringen der freien Schichtseiten von A² und B unter Einwirkung von Druck und/oder Temperatur unter Ausbildung des Schichtverbundes A¹/B/A²;
e) Ablösen des zweiten Schichtträgers vom Schichtverbund A¹/B/A²; und
f) gegebenenfalls Ablösen des ersten Schichtträgers vom Schichtverbund A¹/B/A².

Beispielsweise können hierbei die Schritte a) und b) in einem Arbeitsgang durch gleichzeitiges oder sequentielles Auftragen von A¹ und B auf den ersten Schichtträger durchgeführt werden.

Insbesondere wird das Verfahren so durchgeführt, dass der geträgerte Schichtverbund A¹/B mit seiner Schichtträgerseite über eine gegebenenfalls temperierbare erste Walze geführt wird, welcher gegenüberliegend eine zweite gegebenenfalls temperierbare Walze angeordnet ist, über welche die geträgerte Schicht A² ebenfalls mit ihres Schichtträgerseite geführt wird, wobei der Spalt zwischen der ersten und zweiten Walze durch radiale Verschiebung der beiden Walzen gegeneinander so einstellbar ist, dass der Anpressdruck zwischen geträgertem Schichtverbund A¹/B und geträgerter Schicht A² im Bereich von 1 bis 10 kg/cm Beschichtungsbreite liegt.

Dabei wird der getragene Schichtverbund A¹/B und/oder die geträgerte Schicht A² über 1 bis 359°, wie z.B. über 90 bis 180° des Umfanges der ersten temperierbaren Walze bzw der zweiten walze geführt.

Außerdem kann von Vorteil sein, den geträgerten Schichtverbund A¹/B/A² zur Erhöhung der Haftfestigkeit mindestens 1 Stunde, wie z.B. 1 bis 20 Stunden, bei Temperaturen von 20 °C oder mehr, wie z.B. bei 20 bis 60 °C, vorzugsweise mindestens 8 Stunden lang bei mindestens 40 °C, zu tempern.

Gemäß weiteren Modifikationen können beispielsweise die Schritte d) und e), oder die Schritte d), e) und f), oder die Schritte a) bis f) in einem Arbeitsgang erfolgen.

Verfahrensschritt f) erfolgt beispielsweise durch Abblasen Schichtpakets A¹/B/A² mittels Druckluft, nach gegebenenfalls zuvor erfolgtem Anritzen der Schichtstruktur.

Gegenstand der Erfindung ist auch ein Verfahren zur Herstellung von plättchenförmigen cholesterischen Mehrschichtpigmenten der Schichtfolge A¹/B/A², das dadurch gekennzeichnet ist, dass man ein erfindungsgemäß hergestelltes cholesterisches Schichtmaterial zu einer Teilchengröße im Bereich von bis zu etwa 200 µm, wie z.B. 10 bis 50 µm, vermahlt.

Gegenstand der Erfindung sind außerdem auf diese Weise erhältliche plättchenförmige cholesterische Mehrschichtpigmente, welche insbesondere gekennzeichnet sind durch eine mittlere Teilchengröße im Bereich von 3 bis 200 µm, wie z.B. 10 bis 50 µm, und eine Dicke von 2 bis 10 µm, 3 bis 6 µm.

Ein weiterer Gegenstand betrifft Zusammensetzungen, wie z.B. Beschichtungsmittel, enthaltend wenigstens ein erfindungsgemäßes cholesterisches Mehrschichtpigment.

Beispielsweise sind derartige Beschichtungsmittel ausgewählt ist unter Effektlacken, -farben oder -folien, insbesondere unter selbstdeckenden Effektlacken, -farben oder -folien.

Gegenstand der Erfindung ist auch die Verwendung obiger Mehrschichtpigmente sowie von erfindungsgemäßem Schichtmaterial im Fahrzeug- und Fahrzeugzubehörsektor, im EDV-, Freizeit-, Sportund Spielsektor, als optische Bauelemente wie Polarisatoren oder Filter, im Kosmetikbereich, im Textil-, Leder- oder Schmuckbereich, im Geschenkartikelbereich, in Schreibutensilien oder auf Brillengestellen, im Bausektor, im Haushaltssektor sowie bei Druckerzeugnissen aller Art sowie zur Herstellung von Farben und Lacken oder bei der fälschungserschwerenden Bearbeitung von Gegenständen; sowie die Verwendung einer erfindungsgemäßen Zusammensetzung zur Beschichtung von Gebrauchsgegenständen oder zur Lackierung von Fahrzeugen.

Je nach Anwendungszweck kann das erfindungsgemäße Schichtmaterial auf der Trägerfolie verbleiben, davon abgelöst werden, oder auf einen neuen Träger transferiert werden. So können beispielsweise IR-reflektierende Schichtverbunde (mit transparenter Klebeschicht) auf Glasscheiben transferiert werden.

Vorzugsweise enthalten A¹ und A² unabhängig voneinander cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Polymer; oder
d) einem cholesterischen Polymer in einem polymerisierbaren Verdünnungsmittel,
e) mindestens einem cholesterischen Polymer, dessen cholesterisehe Phase durch schnelles Abkühlen unter die Glasübergangstemperatur eingefroren werden kann,
im gehärtetem Zustand.

Durch Härtung wird die gleichmäßige Orientierung der cholesterischen Moleküle in der Cholesterschicht fixiert. Die obere und die untere cholesterische Schicht A¹ bzw. A² besitzen gleiche oder verschiedene optische Eigenschaften. Sie können insbesondere Licht gleicher oder unterschiedlicher Wellenlänge reflektieren, d. h. von gleicher oder von unterschiedlicher Farbe sein. Im letztgenannten Fall lassen sich besonders interessante Farbeffekte erzielen. Besonders bevorzugt sind A¹ und A² von unterschiedlicher Händigkeit, so dass beispielsweise A¹ Licht einer bestimmten Wellenlänge linkszirkular-polarisiert reflektiert, wogegen A² Licht derselben Wellenlänge rechtszirkular-polarisiert reflektiert und die Zwischenschicht B transparent ausgebildet ist. Vorteilhafterweise erscheint deshalb beispielsweise ein Lack, der erfindungsgemäße Pigmente in dieser bevorzugten Ausführungsform enthält, besonders brillant, da in der Lackschicht A¹ und A² in statistischer Verteilung dem einfallenden Licht zugewandt sind, so dass der Lack sowohl rechts- als auch linkszirkular-polarisiertes Licht einer bestimmten Wellenlänge reflektiert, wogegen ein Lack, der nur Pigmente mit nur einer cholesterischen Schicht oder mit mehreren cholesterischen Schichten gleicher Händigkeit enthält, entweder das links- oder das rechtszirkular-polarisierte Licht durchlässt. Durch Ausbildung mehrerer Cholesterschichten unterschiedlicher Reflektionswellenlänge sind Breitbandpolarisatoren herstellbar.

A¹ und A² können auch hinsichtlich ihrer mechanischen Eigenschaften gleich oder verschieden sein. Sie können beispielsweise unterschiedliche Dicke oder Sprödigkeit aufweisen.

Die konkrete Ausgestaltung der Klebschicht B ist abhängig vom jeweiligen Verwendungszweck der Mehrschichtstruktur oder Mehrschichtpigmente. Wird beispielsweise eine hohe Reflexion im sichtbaren Bereich gewünscht, so sollte die Schicht B eine hohe Deckkraft besitzen. Wird hohe Reflexion im sichtbaren Bereich gewünscht, so sollte die Schicht B eine hohe Deckkraft besitzen. Wird hohe Reflexion im UV- oder IR-Bereich gewünscht, kann eine hochtransparente Schicht B von Vorteil sein. Von besonderem Vorteil ist in diesem Fall auch die verwendung von Schichten A¹ und A² mit unterschiedlicher Händigkeit. Die Verwendung von UV-Absorbern in transparenten Schichten B kann ebenfalls von Vorteil sein.

B kann beispielsweise außerdem mindestens ein anorganisches oder organisches Absorptionspigment, vorzugsweise eingebunden in einer Bindemittelmatrix. Das Absorptionspigment kann ein Weiß-, Buntoder vorzugsweise ein Schwarzpigment sein. Geeignete anorganische Absorptionspigmente sind beispielsweise Titandioxid, Al₂O₃, Bariumsulfat, Strontiumsulfat, Zinkoxid, Zinkphosphate, schwarzes Eisenoxid, Bleichromat, Strontiumchromat, Bariumchromat sowie metallische Pigmente wie Aluminium- oder Bronzepulver.

Geeignete organische Absorptionspigmente sind beispielsweise Azopigmente, Metallkomplex-Pigmente, wie Azo- und Azomethin-Metallkomplexe, Isoindolinon- und Isoindolin-Pigmente, Phthalocyanin-Pigmente, Chinakridon-Pigmente, Perinon- und Perylen-Pigmente, Anthrachinon-Pigmente, Diketopyrrolopyrrol-Pigmente, Thioindigo-Pigmente, Dioxazin-Pigmente, Triphenylmethan-Pigmente, Chinophthalon-Pigmente und fluoreszierende Pigmente.

Besonders geeignet sind feinteilige Absorptionspigmente mit einer mittleren Teilchengröße von 0,01 bis 1 µm, vorzugsweise 0,01 bis 0,1 µm.

Das oben beschriebene cholesterische Mehrschichtmaterial und die davon abgeleiteten Pigmente bieten eine Reihe von Vorteilen:
a) B kann voll deckend (transmittierendes Licht vollständig absorbierend) eingestellt werden, so dass bei ausreichender Pigmentierungshöhe der Farbeindruck des Schichtmaterials oder des Pigmentes völlig untergrundunabhängig ist; eine aufwendige und kostspielige auf transparente Interferenzpigmente abgestimmte untergrundbehandlung, wie bislang üblich, entfällt.
b) Die Farbe von B kann variiert werden, wodurch eine weitere Steuergröße für den Farbeindruck der erfindungsgemäßen Materialien zur Verfügung gestellt wird.
c) Die Brillanz der erfindungsgemäßen Materialien lässt sich durch Variation des Glanzes bzw. der Rauhigkeit von B zusätzlich einstellen.
d) B kann anwendungsspezifisch zur Einstellung der Härte bzw. der Flexibilität des erfindungsgemäßen Materials variiert werden.
e) B kann elektrisch leitfähig sein und dadurch dem Material elektrische Leitfähigkeit verleihen, ohne dass die Qualität der cholesterischen Schichten dadurch beeinträchtigt wird.
f) A¹, B und A² sind von gleichmäßiger Dicke und parallel zueinander übereinander gestapelt, bilden also eine Art Sandwichstruktur, wodurch die Brillanz von erfindungsgemäßen Pigmenten erheblich verstärkt wird. Außerdem wird dadurch ein verbesserter Farbeindruck im Vergleich zu rundum beschichteten Pigmenten bewirkt, weil sämtliche Cholesteren-Moleküle einer Schicht gleich ausgerichtet sind.
g) Der Farbeindruck ist von externen Stimuli weitgehend unabhängig, d.h. über einen weiten Temperatur- und Druckbereich stabil.

Weitere Vorteile sind:
h) Die Haftung der einzelnen Schichten des Schichtpakets untereinander wird zusätzlich verbessert, so daß bei einer nachfolgenden Vermahlung zum Mehrschichtpigment, eine Delamination noch besser vermieden wird.
i) Aufgrund identischer Herstellungsbedingungen für A¹ und A² besitzen die beiden Cholesterschichten absolut identische Eigenschaften, wie z.B. hinsichtlich Farbeindruck. Die Reproduzierbarkeit der Farbeinstellung wird dadurch erheblich erleichtert.

Geeignete zusammensetzungen der cholesterischen Schichten A¹ und A² sind in DE-A-197 38 368.8 sowie 197 38 369.6 der gleichen Anmelderin beschrieben. Auf die Offenbarung bei der Anmeldung wird in vollem Umfang Bezug genommen, so dass an dieser Stelle auf die Zusammensetzung der beiden cholesterischen Schichten nicht mehr eingegangen werden muss. Insbesondere geht aus der zweitgenannten Anmeldung hervor, dass es zweckmäßig ist, zur Herstellung cholesterischer Schichten ein durch Verdünnen gießfähig gemachtes cholesterisches Gemisch zu verwenden. Zur Herstellung der Schichten A¹ und A² brauchbare cholesterische und nematische Moleküle sind beispielsweise beschrieben in DE-A-43 42 280, 196 02 848, 197 136 38, 195 32 408, 197 04 506, 196 31 658, 197 17 371, 195 41 820, 196 19 460, 197 35 829, 197 44 321 und 197 49 123, EP-A-0 358 208, WO 97/00600, 97/49694, 98/03610, 98/04544, 98/14442, 98/23580 und 98/47979, worauf hiermit ausdrücklich Bezug genommen wird.

Als nichtlimitierende Beispiele für geeignete Cholesteren können folgende Verbindungen der Formeln (A) bis (G) genannt werden:

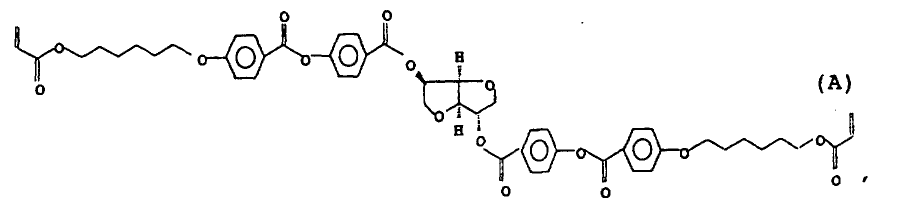

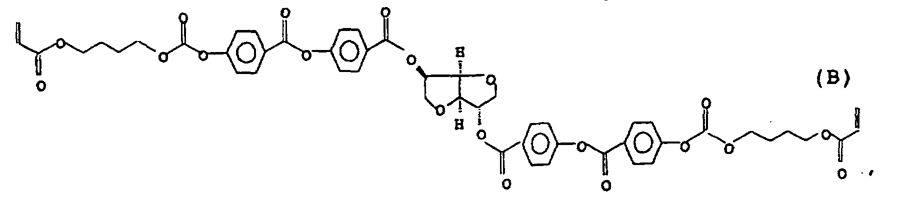

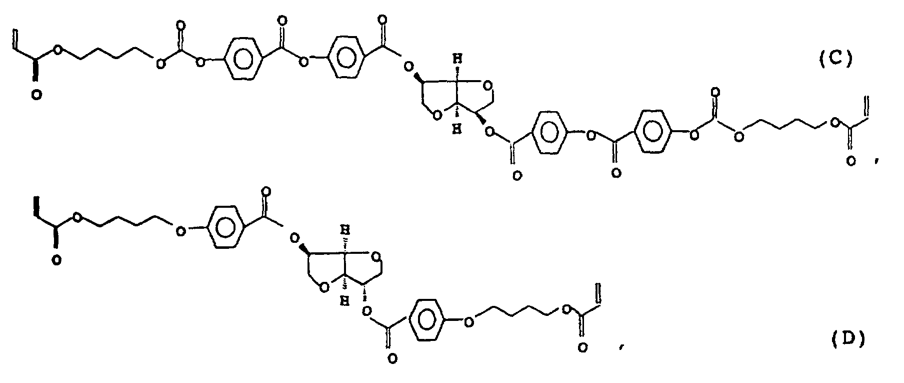

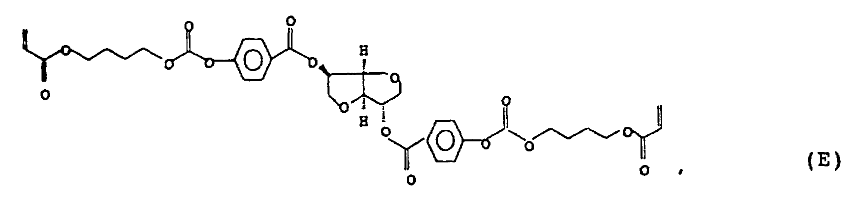

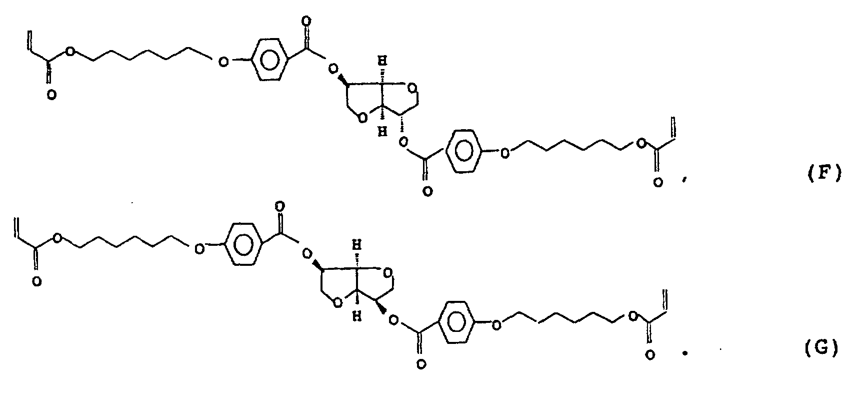

Als nichtlimitierende Beispiele für geeignete Nematen können folgende Verbindungen der Formeln (H) und (K) genannt werden: 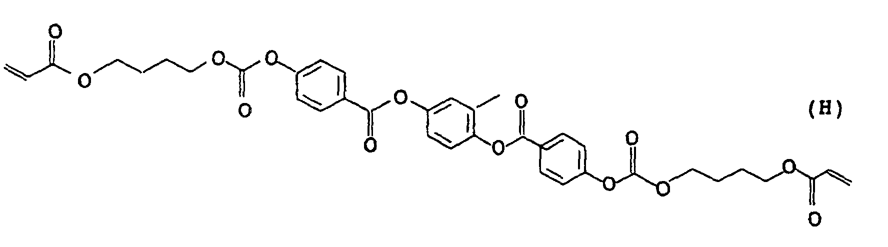 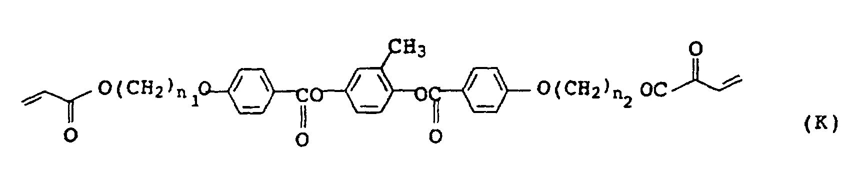 worin n₁ und n₂ unabhängig voneinander für 4 oder 6 stehen, wobei das Monomer der Formel (K) vorzugsweise als Gemisch von Verbindungen mit n₁ /n₂ gleich 4/4, 4/6, 6/4 und 6/6 eingesetzt wird. In den Verbindungen der Formeln (H) und (K) kann der Methylsubstituent am zentralen Benzolkern gegebenenfalls auch durch ein Wasserstoffatom ersetzt sein.

Die Schichten A¹ und A² werden hergestellt, indem man auf einen, vorzugsweise beweglichen, Träger wenigstens eine Schicht eines reaktiven, gießfähigen cholesterischen Gemischs, vorzugsweise durch Gießen, aufbringt und eine feste Cholesterenschicht ausbildet. Vorzugsweise trägt man das reaktive, gießfähige cholesterische Gemisch in der isotropen Phase auf. In einer bevorzugten Ausführungsform verdünnt man das reaktive, gießfähige cholesterische Gemisch vor dem Gießen und bildet die feste Cholesterenschicht gegebenenfalls unter (d.h. während oder nach) Entfernen des Verdünnungsmittels aus. Die Ausbildung der festen Cholesterenschicht kann durch Vernetzung, durch Polymerisation oder durch schnelles Abkühlen unter die Glasübergangstemperatur (Einfrieren der cholesterischen Phase) erfolgen, wobei unter Vernetzung die kovalente Verknüpfung polymerer Verbindungen und unter Polymerisation die kovalente Verknüpfung monomerer Verbindungen zu Polymeren verstanden wird, Unter Härtung wird Vernetzung, Polymerisation oder das Einfrieren der cholesterischen Phase verstanden. Ein Gemisch wird im Rahmen der vorliegenden Erfindung als reaktiv bezeichnet, wenn wenigstens eine in dem Gemisch enthaltene Verbindung zur Ausbildung kovalenter Verknüpfungen befähigt ist.

Der bewegliche Träger ist vorzugsweise bandförmig und besteht z.B. aus einer Metall-, Papier- oder Kunststofffolienbahn. Das cholesterische Gemisch wird vorzugsweise mit einem Anteil an Verdünnungsmittel von etwa 5 bis 95 Gew,-%, insbesondere etwa 30 bis 80 Gew.-%, insbesondere etwa 40 bis 70 Gew.-%, besonders bevorzugt etwa 55 bis 60 Gew.-%, jeweils bezogen auf das Gesamtgewicht des aufzubringenden Gemischs, aufgetragen.

In dem erfindungsgemäßen Verfahren einsetzbare Verdünnungsmittel sind beispielsweise lineare oder verzweigte Ester, besonders Essigsäureester, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK).

Geeignete Verdünnungsmittel sind weiterhin beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet, Geeignete Verdünnungsmittel für Cellulosederivate sind beispielsweise Ether, wie Dioxan, oder Ketone, wie Aceton. Werden Copolyisocyanate als Polymere der Gruppe d) eingesetzt, ist es sinnvoll, polymerisierbare Verdünnungsmittel, wie in der US-A-08 834 745 beschrieben, zu verwenden. Solche polymerisierbaren Verdünnungsmittel sind beispielsweise
- Ester α,β-ungesättigter Mono- oder Dicarbonsäuren, insbesondere C₃-C₆-Mono- oder Dicarbonsäuren, mit C₁-C₁₂-Alkanolen, C₂-C₁₂-Alkandiolen oder deren C₁-C₆-Alkylether und Phenylether, beispielsweise Acrylate und Methacrylate, Hydroxyethyloder Hydroxypropylacrylat oder -methacrylat sowie 2-Ethoxyethylacrylat oder -methacrylat;
- Vinyl-C₁-C₁₂-alkylether, wie Vinylethyl-, Vinylhexyl- oder Vinyloctylether;
- Vinylester von C₁-C₁₂-Carbonsäuren, wie Vinylacetat, Vinylpropionat Vinyllaurat;
- C₃-C₉-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, α-Methylstyrol, Chlorstyrol und
- Verbindungen mit zwei oder mehreren vernetzbaren Gruppen wie Diester von Diolen (einschließlich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat. Ein besonders bevorzugtes polymerisierbares Verdünnungsmittel ist Styrol.

Auch die Gemische können in kleinen Mengen polymerisierbare Verdünnungsmittel zusätzlich zu dem inerten Verdünnungsmittel enthalten, Bevorzugte zusetzbare, polymerisierbare Lösungsmittel sind Acrylate, insbesondere höherfunktionelle Acrylate wie Bis-, Tris- oder Tetraacrylate, besonders bevorzugt hochsiedende Oligoacrylate. Die bevorzugte Zusatzmenge liegt bei etwa 5 Gew.-%, bezogen auf das Gesamtgewicht des Gemischs.

Gegebenenfalls kann auch Wasser dem verdünnungsmittel zugesetzt sein oder sogar als alleiniges Verdünnungsmittel eingesetzt werden.

Das vernetzbare oder polymerisierbare Gemisch kann für die photochemische Polymerisation handelsübliche Photoinitiatoren enthalten, Für eine Härtung durch Elektronenstrahlen sind solche nicht notwendig. Geeignete Photoinitiatoren sind beispielsweise Isobutyl-benzoinether, 2,4,6-Trimethylbenzoyldiphenylphosphinoxid, 1-Hydroxycyclohexyl-phenylketon, 2-Benzyl-2-dimethylamino-1-(4-morpholinophenyl)-furan-1-on, Mischungen von Benzophenon und 1-Bydroxycyclohexyl-phenylketon, 2,2-Dimethoxy-2-phenylacetophenon, perfluorierte Diphenyltitanocene, 2-Methyl-1-(4-[methylthio] phenyl)-2-(4-morpholinyl)-1-propanon, 2-Hydroxy-2-methyl-1-phenyl-propan-1-on, 4-(2-Hydroxyethoxy)phenyl-2-hydroxy-2-propylketon, 2,2-Diethoxyacetophenon, 4-Henzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,1-Campherchinon, Ethyl-d,1-campherchinon, Mischungen von Benzophenon und 4-Methylbenzophenon, Benzophenon, 4,4'-Bisdimethylamin-benzophenon, (η⁵-Cyclopentadienyl) (η⁶-Isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Brillanz der Pigmentschicht kann durch Zugabe geringer Mengen geeigneter Verlaufsmittel gesteigert werden. Einsetzbar sind etwa 0,005 bis 1 Gew.-%, insbesondere 0,01 bis 0,5 Gew.-%, bezogen auf die Menge an eingesetztem Cholester; Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält das polymerisierbare oder vernetzbare Gemisch auch Stabilisatoren gegen UV- und Wettereinflüsse, Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-S-triazine oder sterisch gehinderte Amine. Diese Stoffe können allein oder vorzugsweise in Form von Gemischen eingesetzt werden.

Vorzugsweise weist das gießfähige, reaktive cholesterische Gemisch eine Viskosität im Bereich von etwa 10 bis 500 mPas, insbesondere etwa 2 bis 10 mPas, gemessen bei 23 °C, auf.

Besonders bevorzugt bringt man das cholesterische Gemisch mit einer Geschwindigkeit von etwa 1 bis 800 m/min, insbesondere etwa 5 bis 100 m/min, auf den Träger auf.

In einer bevorzugten Ausführungsform des Verfahrens wird das Gemisch mittels eines Umkehrwalzenbeschichters, eines kiss coaters oder insbesondere mittels eines Extrusionsgießers, Rakelgießers oder Messergießers, ganz besonders bevorzugt mittels eines Rakelgießers oder Messergießers auf die Unterlage aufgebracht.

Vorteilhaft wird das Gemisch mittels einer Gießvorrichtung aufgetragen, die das Gemisch beim Auftragen einem hohen Schergefälle unterwirft.

Vorzugsweise wird eine Gießvorrichtung verwendet deren Gießspaltbreite im Bereich von etwa 2 bis 50 µm, insbesondere etwa 4 bis 15 µm liegt. Vorteilhaft ist außerdem, bei einem Gießerüberdruck von etwa 0,01 bis 0,7 bar, vorzugsweise 0,05 bis 0,3 bar zu arbeiten.

Besonders geeignete Vorrichtungen zur Herstellung cholesterischer Schichten sind Beschichtungsmaschinen mit Messergießer-Auftragswerk mit denen sich ein cholesterisches Gemisch auf eine Trägerfolie die über eine mit sehr hoher Rundlaufgenauigkeit laufende Walze geführt wird, aufbringen lässt. Vorteilhafterweise ist das Gießmesser auf einen Präzisionsschlitten montiert, so dass sich ein definierter Spalt gegen die Trägerfolie genau einstellen lässt.

Gegebenenfalls wird die Beschichtungsmaschine mit Kühlvorrichtungen, beispielsweise mit Kühlwalzen, versehen um auch temperaturempfindliche Folien als Unterlagen verwenden zu können.

Vorzugsweise erfolgt der Auftrag des cholesterischen Gemischs unter erhöhtem Druck, insbesondere bei einem Gießerüberdruck im Bereich von etwa 0,01 bis 0,7 bar, besonders bevorzugt 0,05 bis 0,3 bar.

Die aufgetragene Schicht wird durch eine Trockenvorrichtung, beispielsweise durch einen Umlufttrockner, getrocknet und anschließend, oder anstelle des Trocknens, thermisch, durch UV-Strahlen oder durch Elektronenstrahlen polymerisiert bzw. vernetzt, wobei die Härtung durch UV-Strahlung oder durch Elektronenstrahlen bevorzugt ist.

Die aufgetragene Schicht wird vorzugsweise bis zu einem Restgehalt an flüchtigen Verdünnungsmitteln von weniger als 1 Gew.-%, bezogen auf das Trockengewicht der aufgebrachten Schicht, getrocknet. Die Trocknung erfolgt vorzugsweise bei einer Temperatur im Bereich von 20 bis 100 °C über einen Zeitraum von etwa 2 bis 60 Sekunden.

Die gehärtete cholesterische Schicht weist bevorzugt eine mittlere Trockenschichtdicke von 0,5 bis 20 µm, wie z.B. 1 bis 10 µm, insbesondere 1 bis 4,5 µm, besonders bevorzugt 1 bis 3 µm, oder 2 bis 4 µm auf. Die erfindungsgemäß hergestellten cholesterischen Schichten weisen bevorzugt eine mittlere Schichtdickenschwankung von ± 0,2 µm oder darunter auf, was eine hohe Farbkonstanz der cholesterischen Schicht zur Folge hat. Die mittlere Schichtdikkenschwankung kann in einfacher Weise, wie z.B. mikroskopisch anhand von Dünnschnitten bestimmt werden. Eine geeignete Bestimmungsmethode kann beispielsweise in Anlehnung an die in der EP-A-0 566 100 beschriebene Methodik durchgeführt werden.

Die so hergestellten cholesterischen Schichten können durch wenigstens einen der im Folgenden genannten Parameter zusätzlich charakterisiert werden:
a) Rz (nach DIN 4768): ≤ 210 nm, insbesondere ≤ 110 nm, wie z.B. etwa 105 bis 40 nm;
b) Ra (nach DIN 4768/1): ≤ 40 nm, insbesondere ≤ 20 nm, vorzugsweise ≤ 16 nm, wie z.B. 15 bis 5 nm;
c) Glanz (nach DIN 67530) bei Cholesterauftrag auf eine schwarz rückbeschichtete PET-Folie und einem Messwinkel von 60°:
   > 90, wie z.B. 100 bis 190, und insbesondere
   > 100, wie z.B. 100 bis 130 bei Reflexionsmaximum im blauen Spektralberich; oder
   > 130, wie z.B. 130 bis 160 bei Reflexionsmaximum im grünen Spektralbereich; oder
   > 160, wie z.B. 160 bis 190 bei Reflexionsmaximum im roten Spektralbereich;
d) Domänendurchmesser: ≥ 5µm, insbesondere ≥ 15 µm, vorzugsweise ≥20 µm oder ≥ 25 µm mit Tendenz zur Auflösung;
e) Tiefe der die Domänen begrenzenden Mikrorillen: ≤ 110 nm, insbesondere ≤ 50 nm, vorzugsweise ≤ 15 nm, wie z.B. 10 bis 3 nm.

Die Schicht B kann, wie eingangs bereits erwähnt, mindestens ein anorganisches oder organisches Weiß-, Bunt- oder Schwarzpigment, enthalten, falls diese Schicht spezielle Absorptionseigenschaften besitzen soll.

Bevorzugt einsetzbar sind Graphitpigmente oder verschiedene Rußtypen, ganz besonders bevorzugt leicht dispergierbare Farbruße mit einer spezifischen Oberfläche von 30 bis 150 m²/g (BET-Methode) und einem Absorptionsvermögen von 50 bis 100 ml Dibutylphthalat/100 g (DBP-Zahl).

Besonders bevorzugte Absorptionspigmente sind solche, die der transmittierendes Licht absorbierenden Schicht magnetische Eigenschaften verleihen. Hierfür geeignet sind beispielsweise γ-Fe₂O₃, Fe₃O₄, CrO₂ oder ferromagnetische Metallpigmente, wie z.B. Fe-, Fe-Cu-, Fe-Ni-Cu-Legierungen, Mit diesen Pigmenten lassen sich hochglänzende schwarze Zwischenschichten herstellen.

Pigmente, deren absorbierende Schicht magnetisch ist, stellen einen weiteren Gegenstand der vorliegenden Erfindung dar. Solche Pigmente können vorteilhafterweise durch Anlegen eines Magnetfeldes beliebig orientiert werden. Beispielsweise kann so vermieden werden, dass einzelne Pigmentplättchen aus den anderen herausragen, was zur Folge hat, dass weniger Licht gestreut wird und der Farbeindruck besser wird, Alle Plättchen können gemeinsam in einem bestimmten Winkel orientiert werden. Es ist auch möglich, gesamtflächige Raster zum Erzielen neuer Farbeffekte oder partielle Raster zum optischen Herausheben von Schriften oder Strukturen zu erzeugen. Die erfindungsgemäßen, magnetischen cholesterischen Pigmente sind auch in einer flüssigen Matrix vorteilhaft einsetzbar, beispielsweise in Flüssigkristalldisplays (LCDS), in denen sie bei Anlegen eines Magnetfeldes ihre Richtung und somit ihren Farbeindruck ändern.

Die Absorptionspigmente sind vorzugsweise in eine organische Bindemittelmatrix eingebunden. Als Bindemittel können die lacküblichen Systeme eingesetzt werden. Vorzugsweise eignen sich strahlungshärtbare Systeme, die reaktive vernetzbare Gruppen, wie Acryl-, Methacryl-, α-Chloracryl-, Vinyl-, Vinylether-, Epoxid-, Cyanat-, Isocyanat- oder Isothiocyanatgruppen enthalten.

Als Bindemittel sind auch monomere Mittel und deren Mischungen mit polymeren Bindemitteln einsetzbar. Als monomere Mittel kommen bevorzugt solche in Betracht, die zwei oder mehr vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Besonders bevorzugt sind Acryl-, Methacryl- oder Vinylethergruppen. Monomere Mittel mit zwei vernetzungsfähigen Gruppen sind beispielsweise die Diacrylate, die Divinylether oder die Dimethacrylate von Diolen wie beispielsweise Propandiol, Butandiol, Hexandiol, Ethylenglykol, Diethylenglykol, Triethylenglykol oder Tetrapropylenglykol.

Monomere Mittel mit drei vernetzungsfähigen Gruppen sind beispielsweise die Triacrylate, die Trivinylether oder die Trimethacrylate von Triolen wie beispielsweise Trimethylolpropan, ethoxyliertem Trimethylolpropan mit 1 bis 20 Ethylenoxideinheiten, propoxyliertem Trimethylolpropan mit 1 bis 20 Propylenoxideinheiten, gemischt ethoxyliertem und propoxyliertem Trimethylolpropan, bei dem die Summe aus Ethylenoxideinheiten und Propylenoxideinheiten 1 bis 20 beträgt, Monomere Mittel mit drei vernetzungsfähigen Gruppen sind beispielsweise auch die Triacrylate, die Trivinylether oder die Trimethacrylate von Glycerin, ethoxyliertem Glycerin mit 1 bis 20 Ethylenoxideinheiten, propoxyliertem Glycerin mit 1 bis 20 Propylenoxideinheiten, gemischt ethoxyliertem und propoxyliertem Glycerin, bei dem die Summe aus Ethylenoxideinheiten und Propylenoxideinheiten 1 bis 20 beträgt.

Monomere Mittel mit vier vernetzungsfähigen Gruppen sind beispielsweise die Tetraacrylate, die Tetravinylether oder die Tetramethacrylate von Tetraolen wie beispielsweise Bis-trimethylolpropan, ethoxyliertem Bis-trimethylolpropan mit 1 bis 20 Ethylenoxideinheiten, propoxyliertem Bis-trimethylolpropan mit 1 bis 20 Propylenoxideinheiten, gemischt ethoxyliertem und propoxyliertem Bis-trimethylolpropan, bei dem die Summe aus Ethylenoxideinheiten und Propylenoxideinheiten 1 bis 20 beträgt, Monomere Mittel mit vier vernetzungsfähigen Gruppen sind beispielsweise auch die Tetraacrylate, die Tetravinylether oder die Tetramethacrylate von Tetraolen wie beispielsweise Pentaerythrit, ethoxyliertem Pentaerythrit mit 1 bis 20 Ethylenoxideinheiten, propoxyliertem Pentaerythrit mit 1 bis 20 Propylenoxideinheiten, gemischt ethoxyliertem und propoxyliertem Pentaerythrit, bei dem die Summe aus Ethylenoxideinheiten und Propylenoxideinheiten 1 bis 20 beträgt.

Zur Erhöhung der Reaktivität bei der Vernetzung oder Polymerisation an Luft können die Bindemittel und die monomeren Mittel 0,1 bis 10 % eines primären oder sekundären Amins enthalten. Beispiele für geeignete Amine sind Ethanolamin, Diethanolamin oder Dibutylamin.

Die Herstellung der Absorptionspigmentformulierung kann nach den üblichen, in der Fachwelt bekannten Dispergierverfahren und unter Verwendung von Verdünnungsmitteln, Dispergiermitteln, Photoinitiatoren und gegebenenfalls weiteren Additiven erfolgen.

Als Verdünnungsmittel können Wasser oder organische Flüssigkeiten oder deren Mischungen verwendet werden, wobei organische Flüssigkeiten bevorzugt sind. Besonders bevorzugt sind organische Flüssigkeiten mit einem Siedepunkt unterhalb von 140 °C, insbesondere Ether wie Tetrahydrofuran, Ketone wie Ethylmethylketon und Ester wie Butylacetat.

Als Dispergiermittel können niedermolekulare Dispergiermittel wie beispielsweise Stearinsäure oder auch polymere Dispergiermittel verwendet werden. Geeignete polymere Dispergiermittel oder Dispergierharze sind dem Fachmann bekannt. Insbesondere sind zu nennen sulfonatgruppen-, phosphatgruppen-, phosphonatgruppen- oder carboxylgruppenhaltige Polyurethane, carboxylgruppenhaltige Vinylchloridcopolymere, Polyiminpolyester oder Polyetheracrylate mit oder ohne eingebaute funktionelle Gruppen.

Für die Herstellung von vernetzbaren oder polymerisierbaren Absorptionspigmentformulierungen können für die photochemische Polymerisation handelsübliche Photoinitiatoren verwendet werden, beispielsweise die oben für die photochemische Polymerisation der cholesterischen Gemische aufgeführten Photoinitiatoren.

Im Rahmen der vorliegenden Erfindung wird der für die Herstellung der Schicht B verwendeten Masse zusätzlich zu den vorgenannten Bestandteilen ein druck- und/oder temperaturempfindlicher Klebstoff beigemischt. Derartige Klebstoffe sind an sich aus dem Stand der Technik bekannt. Dazu zählen beispielsweise Lösungsmittel enthaltende Klebstoffe auf der Basis von Ethylen-Vinylacetat-Mischpolymerisat, Polyacrylate, Polymethacrylsäureester, Polyisobutene, Lösungsmittel enthaltende Klebstoffdispersionen, wie Naturkautschuk, Synthesekautschuk, Polyvinylacetat bzw. Polyurethanderivate. Besonders bevorzugt im Rahmen der vorliegenden Erfindung sind Hydroxylpolyesterpolyurethane, welche in weiten Bereichen an die jeweiligen technischen Gegebenheiten der erfindungsgemäß zu verwendenden Kaschieranlage angepasst werden können. Falls die oben beschriebene Rußdispersion in einem wässrigen System hergestellt wird, können als klebewirksame Komponenten auch Polyvinylalkohol und modifizierte Zellulose eingesetzt werden. Außerdem sind auch strahlungsvernetzbare, insbesondere UVvernetzbare Kleber erfindungsgemäß brauchbar.

Der Klebeeffekt kann dabei auf einem thermischen wie auch chemischen Abbindeprozess beruhen. Auch Zweikomponentensysteme sowie strahlungshärtbare Klebstoffe sind für die erfindungsgemäße Zusammensetzung der Schicht B geeignet.

Für die Auswahl der Klebstoffe sind folgende Eigenschaften von Belang:
- Gute Löslichkeit in den bei der Pigmentdispersion verwendeten Lösungsmitteln.
- Gute Verträglichkeit mit der Pigmentdispersion.
- Die Wärmeaktivierungstemperatur des Klebers B sollte in einem Temperaturbereich von 20 bis 120°C liegen.
- Falls nach dem Beschichtungsvorgang der Schicht B diese klebermodifizierte Pigmentschicht direkt klebefrei aufgewickelt werden soll, ist ein schneller Festigkeitsanstieg erforderlich, was einen Klebstoff mit starker Kristallisationsneigung erfordert.

Die erfindungsgemäße Zusammensetzung der Schicht B wird beispielsweise hergestellt, indem in einem Kneter die oben beschriebene Pigmentdispersion, bestehend aus Pigment, Gleitmittel, Dispergierharz, Lösungsmittel geknetet wird und anschließend mit weiterem Lösungsmittel versetzt und dann in einer Rührwerksmühle auf den optimalen Dispersionsgrad gebracht wird. Dabei kann der Dispersionsfortschritt mittels eines Interferenzkontrastverfahrens, wie es beispielsweise in der EP-B-0 032 710 beschrieben ist, verfolgt werden. Das Dispergierverfahren kann dann abgeschlossen werden, wenn die zu prüfende Oberfläche agglomeratfrei ist. Eine so gefertigte Schicht ist hochglänzend und weist eine Grundrauhigkeit von < 100 nm auf.

Anschließend wird der so hergestellten Pigmentdispersion ein wärme- und/oder druckaktivierbarer Klebstoff, wie er oben beschrieben ist, zugesetzt.

Art und Menge des zugesetzten Klebstoffs können von jedem Fachmann durch Routineversuche ermittelt werden. Es müssen folgende Bedingungen erfüllt sein:
- Die Schichthaftung der Schichten A^{1,}, B und A² untereinander muss, beispielsweise mindestens um den Faktor 2, bevorzugt um den Faktor 3, größer sein, als die jeweilige Haftung von A¹ bzw. A² am Schichtträger. Die Haftkraft von A¹, A² am Schichtträger beträgt üblicherweise zwischen 0,1 und 2 cN, wie z.B. 0,1 bis 1,0 cN.
- Bei dem Kaschiervorgang muss eine Cholesterschicht auf die Klebstoffschicht bei den gewählten Druck- und Temperaturbedingungen übertragbar sein, d.h., die Haftung der Cholesterschicht auf der Schicht B muss größer sein als die Haftung auf ihren polymeren Schichtträger.

Die erfindungegemäßen Schichtmaterialien und Pigmente können grundsätzlich folgende Schichtenfolge aufweisen:
1) gegebenenfalls mindestens eine Releaseschicht,
2) mindestens eine cholesterische Farbeffektschicht,
3) mindestens eine Klebeschicht, die gegebenenfalls transmittierendes Licht vollständig oder teilweise absorbiert,
4) mindestens eine weitere cholesterische Farbeffektschicht und
5) gegebenenfalls mindestens eine Releaseschicht.

Als Schichtträger dienen vorzugsweise bekannte, vorzugsweise thermoplastische, Filme aus Polyestern, wie Polyethylenterephthalat oder Polyethylennaphthalat sowie Polyolefinen, Celiulosetriacetat, Polycarbonaten, Polyamiden, Polyimiden, Polyamidoimiden, Polysulfonen, Aramiden oder aromatischen Polyamiden. Die Dicke der Schichtträger beträgt vorzugsweise etwa 5 bis 100 µm, insbesondere etwa 10 bis 20 µm, Der Schichtträger kann vorher einer Koronaentladungsbehandlung, einer Plasmabehandlung, einer leichten Adhäsionsbehandlung, einer Wärmebehandlung, einer Staubentfernungsbehandlung oder ähnlichem unterworfen werden, Der Schichtträger weist vorzugsweise eine mittlere Mittellinien-Oberflächenrauhigkeit von 0,03 µm oder weniger, insbesondere von 0,02 µm oder weniger, besonders bevorzugt von 0,01 µm oder weniger auf. Außerdem ist es erwünscht, dass der Träger nicht nur eine derart geringe mittlere Mittellinien-Oberflächenrauhigkeit aufweist, sondern auch keine großen Vorsprünge (Erhebungen) von 1 µm oder mehr besitzt. Das Rauhigkeitsprofil der Oberfläche des Trägers kann durch Füllstoffe, die dem Schichtträger bei dessen Herstellung zugesetzt werden, variiert werden. Beispiele für geeignete Füllstoffe sind Oxide und Carbonate von Ca, Si und Ti sowie organische feine Pulver von Acrylsubstanzen.

Der Träger kann auch eine metallisierte Folie oder ein vorzugsweise poliertes Metallband sein, das beispielsweise auch als Endlosband ausgebildet sein kann.

Die gegebenenfalls vorhandene Releaseschicht umfasst beispielsweise Polyolefinverbindungen oder silikonhaltige Verbindungen.

Das erfindungsgemäße Verfahren zur Herstellung eines cholesterischen Schichtmaterials wird vorzugsweise wie folgt durchgeführt.
a) In einem ersten Schritt wird eine erste cholesterische Schicht A¹ auf einen ersten Schichtträger mittels einer der oben genannten Gießvorrichtungen aufgetragen, getrocknet und gehärtet. Die Schichtdicke dieser ersten cholesterischen Schicht beträgt etwa 0,5 bis 20 µm, insbesondere etwa 1 bis 10 µm, besonders bevorzugt etwa 1 bis 3 µm. Das gießfähige cholesterische Gemisch A¹ weist vorzugsweise eine Viskosität im Bereich von etwa 10 bis 500 mPas auf, insbesondere etwa 10 bis 100 mPas, gemessen bei 23°C. Besonders bevorzugt bringt man das cholesterische Gemisch mit einer Geschwindigkeit von etwa 1 bis 800 Meter pro Minute, insbesondere etwa 5 bis 100 Meter pro Minute auf den Schichtträger.
b) Anschließend wird die klebstoffhaltige Schicht B auf die Schicht A¹ aufgebracht, gegebenenfalls gehärtet, jedenfalls aber durch eine aus dem Stand der Technik bekannte Trocknungsvorrichtung gefahren. Die Trockenschichtdicke von B liegt im Bereich von etwa 0,2 bis 3 µm, besonders bevorzugt bei etwa 0,5 bis 1,5 µm. Besonders bevorzugt erfolgt die Auftragung der Schicht B auf die Schicht A¹ durch Simutanbeschichtung; es können aber auch beide Schichten in getrennten Gießvorgängen aufgetragen werden.
c) In einem nächsten Schritt wird ein zweites cholesterisches Gemisch, welches die Schicht A² bildet auf einen zweiten Schichtträger aufgebracht, getrocknet und gehärtet. Der Gießvorgang erfolgt bevorzugt analog zur Herstellung der Schicht A¹.
d) Anschließend folgt die Kaschierung, d.h. die Übertragung der Schicht A² auf die mit Klebstoff versehene Schicht B.
e) Dann wird der zweite Schichtträger von der Schicht A² abgezogen.
f) Anschließend kann das Mehrschichtstruktur mit der Schichtfolge A¹/B/A² vom ersten Schichtträger abgelöst werden und ist damit an sich gebrauchsfertig.

Das Ablösen der Mehrschichtstruktur vom ersten Schichtträger kann z.B. dadurch erfolgen, dass dieser über eine Umlenkrolle mit kleinem Durchmesser geführt wird. In Folge dessen blättert das vernetzte Material von dem Träger ab. Weitere bekannte Methoden sind gleichfalls geeignet, z.B. das Abziehen des Schichtträgers über eine scharfe Kante, mittels Airknife (Luftrakel) Anritzen des Schichtpakets und nachfolgendes Abblasen mittels Druckluft, Wasser- oder Dampfstrahl, Ultraschall oder Kombinationen davon.

Das nun trägerlose cholesterische Mehrschichtmaterial kann gegebenenfalls durch Zerkleinerung auf die gewünschte Korngröße zu einem Mehrschichtpigment verarbeitet werden. Dies kann beispielsweise durch Mahlen in Universalmühlen erfolgen. Die zerkleinerten Pigmente können anschließend zur Einengung der Korngrößenverteilung, beispielsweise durch einen Siebprozess klassiert werden.

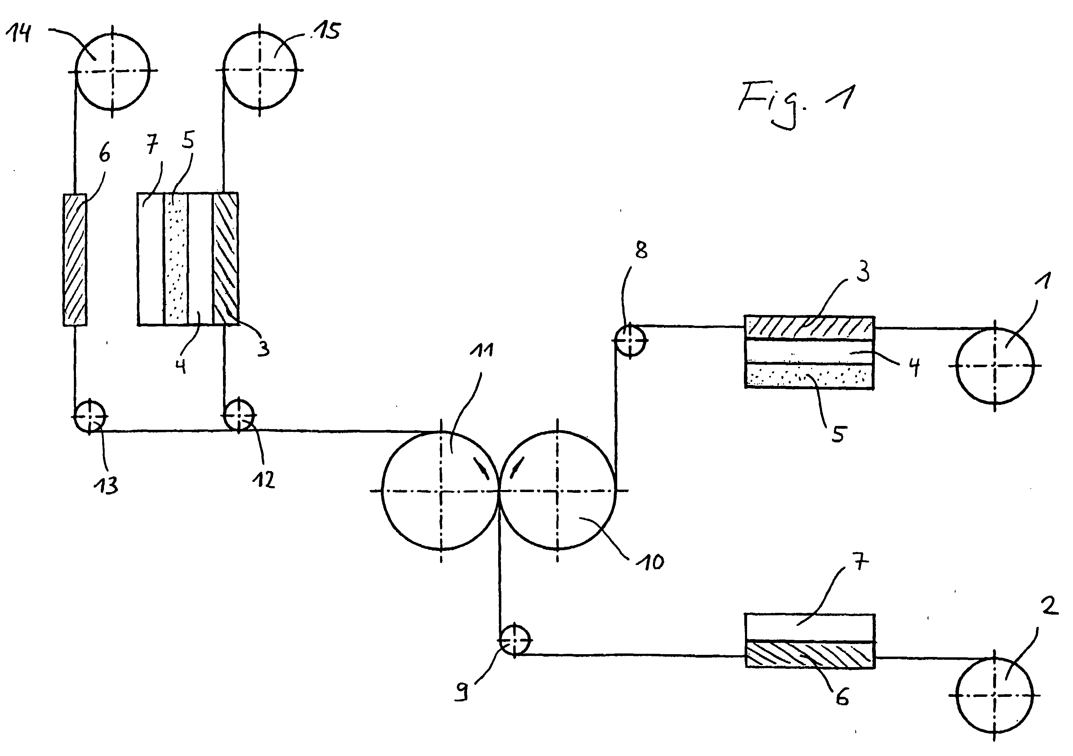

Unter Bezugnahme auf Figur 1, welche eine Prinzipzeichnung der Kaschieranlage zeigt, wird nunmehr die Herstellung einer erfindungsgemäßen Schichtstruktur A¹/B/A² geschildert.

Auf einer Vorratsrolle 1 ist der wie oben geschildert erste Verbund aufgewickelt, bestehend aus dem ersten Schichtträger 3, der Schicht 4 (d.h. Schicht A¹) sowie der darauf gegossenen Schicht 5 (d.h. Schicht B). Auf einer zweiten Vorratsrolle 2 befindet sich der zweite Verbund, bestehend aus dem zweiten Schichtträger 6 sowie der zweiten cholesterischen Schicht 7 (d.h. Schicht A²). Nunmehr wird der erste Verbund über eine Umlenkrolle 8 mit der Schichtträgerseite 3 über den Mantel einer beheizbaren Walze 10 in den Spalt zwischen der Walze 10 und einer dieser gegenüberliegenden Walze 11 geführt, wobei sich die Walzen gegenläufig zueinander drehen. In diesen Spalt wird mit der gleichen Transportgeschwindigkeit wie der erste Verbund nunmehr der zweite Verbund durch Abrollen von der Vorratsrolle 2 über eine Umlenkrolle 9 so geführt, dass beim Passieren des Spaltes die Klebeschicht 5 des ersten Verbundes sowie die Schicht A² (Bezugszeichen 7) des zweiten Verbundes miteinander in Kontakt gebracht werden. Vorzugsweise ist die Walze 10 eine beheizbare Stahlwalze. Die Walze 11 ist vorzugsweise eine Kunststoffwalze, beispielsweise mit einem Polyurethanmantel versehen, welche gegen die Walze 10 gepresst wird. Durch ein Verstellen der Umlenkrolle 8 kann der Umschlingungswinkel des ersten Verbundes und dadurch die Aufheizzeit variiert werden. Die Walze 11 wird gegen die Walze 10 mit einer Kraft von 1 bis 10 kg je Zentimeter Gießbreite des Verbundes gedrückt, so dass in dem Walzenspalt eine innige Verbindung zwischen der Schicht 5 und der Schicht 7 erfolgt. Da die Haftung des Schicht 7 zur Schicht 5 größer ist, als die zum zweiten Schichtträger 6, trennt sich die Schicht 7 vom zweiten Schichtträger 6. Dieser wird über eine Umlenkrolle 13 auf eine Aufwickelrolle 14 geführt. Die auf dem Schichtträger 3 befindliche Mehrschichtstruktur umfassend die Schichten 4, 5, 7, wird über eine weitere Umlenkrolle 12 auf einer Aufwickelrolle 15 trägerseitig aufgewikkelt.

Selbstverständlich sind auch zahlreiche Abwandlungen des geschilderten Kaschierprozesses möglich. Beispielsweise kann die Herstellung des ersten und des zweiten Verbundes sowie der Übertragungsprozess in einem Arbeitsgang (inline) erfolgen. Dabei werden erster und zweiter Verbund unmittelbar nach ihrer Herstellung, d.h. ohne Zwischenaufrollung, in der oben geschilderte Kaschiervorrichtung zwischen den Walzen 10, 11 zusammengeführt.

In einer weiteren Abwandlung des obigen Verfahrens kann die Aufwicklung des ersten Schichtträgers 3 auf der Aufwickelrolle 15 unter gleichzeitiger Ablösung der Mehrschichtstruktur 4, 5, 7 vom Schichtträger erfolgen, welche entweder direkt einer Zerkleinerung zugeführt wird oder auf eine weitere Rolle aufgewickelt werden kann.

Wird, wie eben geschildert, die Herstellung des ersten sowie des zweiten Verbunden "inline" mit dem Kaschiervorgang durchgeführt, so kann der Klebstoff in der Schicht B eine niedrigere Aktivierungstemperatur, vorzugsweise im Bereich von 20 bis 50°C, haben, da ja der erste Verbund nach seiner Herstellung nicht mehr aufgewickelt werden muss. Soll dagegen der Herstellungsvorgang des ersten und des zweiten Verbundes sowie der Übertragungsprozess offline durchgeführt werden, d.h. in getrennten Arbeitsschritten, so muss der Kleber eine höhere Aktivierungstemperatur im Bereich von 40 bis 120°C besitzen, damit der erste Verbund beim Aufwikkeln auf der Vorratsrolle 1 nicht verklebt.

Ein weiterer Gegenstand der vorliegenden Erfindung ist die Verwendung der erfindungsgemäßen Pigmente im Fahrzeug- und Fahrzeugzubehörsektor, im Freizeit-, Sport- und Spielsektor, im Kosmetikbereich, im Textil-, Leder- oder Schmuckbereich, im Geschenkartikelbereich, in Schreibutensilien, Emballagen oder Brillengestängen, im Bausektor, im Haushaltssektor sowie bei Druckerzeugnissen aller Art, wie beispielsweise Kartonagen, Verpackungen, Tragetaschen, Papiere, Etiketten oder Folien.

Die durch die erfindungsgemäßen cholesterischen Folien bzw. cholesterischen Pigmente erzielbaren Farbeffekte umfassen bedingt durch die Vielfalt der erzielbaren Reflektionswellenlänge auch den UV- und den IR-Bereich sowie selbstverständlich den Bereich des sichtbaren Lichtes, Werden die erfindungsgemäßen Pigmente auf Banknoten, Scheckkarten, andere bargeldlose Zahlungsmittel oder Ausweise aufgebracht (beispielsweise durch bekannte Druckverfahren) oder in sie eingearbeitet erschwert dies das identische Kopieren, insbesondere das Fälschen dieser Gegenstände erheblich. Ein weiterer Gegenstand der vorliegenden Erfindung ist somit die Verwendung der erfindungsgemäßen Pigmente zur fälschungserschwerenden Bearbeitung von Gegenständen insbesondere von Banknoten, Scheckkarten oder anderen bargeldlosen Zahlungsmitteln oder Ausweisen.

Die nachfolgenden nichtlimitierenden Beispiele dienen der weiteren Erläuterung der Erfindung.

### Beispiel 1

### Herstellung von Dreischichtstrukturen unter verschiedenen Herstellungsbedingungen

### a) Herstellung der geträgerten Schicht A¹

Mit Hilfe einer Gießvorrichtung, wie sie in der deutschen Anmeldung Aktenzeichen 19738369.6 näher beschrieben ist, wird eine Lösung bestehend aus 45 Teilen Cholesterenmischung (96,2 % nematische Komponente gemäß Formel (K) und 3,8 % chirale Komponente gemäß Formel (D)).

3 Teilen Photoinitiator Irgacure^{R} 907 (von Fa. Ciba-Geigy), 0,1 Teil Byk 361 (von Fa. Byk) und 51,9 Teile Methylethylketon auf eine 15µm dicke Polyesterfolie aufgebracht. Die beschichtete Folie wird dann durch einen Trockenkanal geführt, der auf 60°C temperiert ist. Anschließend wird die physikalisch getrocknete Schicht in-line durch Bestrahlen mit UV-Licht unter Stickstoffatmosphäre gehärtet und die beschichtete Folie wird auf eine Spule gewikkelt. Die Cholesterenschicht hat eine Dicke von 2 µm und reflektiert senkrecht zur Schichtebene Licht mit einem Maximum der Reflexion bei einer Wellenlänge von 505 nm. Mit dem Auge betrachtet erscheint die Schicht auf schwarzem Hintergrund bei senkrechtem Aufblick grün mit einem Farbwechsel nach blau, wenn man schräg auf die Schicht schaut.

### b) Herstellung der Zwischenschicht B

In einem Laborkneter mit einem Nutzvolumen von 300 ml werden 150 g Farbruß Regal 40OR (Hersteller: Cabot Corporation) mit 3 g Stearinsäure, 40 g eines phosphonathaltigen Dispergierharzes 50%ig in Tetrahydrofuran, beschrieben in DE-A-195 16 784, und 40 g Methylethylketon 1 Stunde geknetet. Die daraus resultierende Knetmasse (Feststoffanteil 70,7 %) wird anschließend in einem Dissolver mit 499 g Methylethylketon auf einen Feststoffgehalt von 25 % eingestellt. Diese Dispersion wird danach in einer Rührwerksmühle (Typ Dispermat SL, Mahlkammervolumen 125 ml, Mahlkörper Zirkonoxid 1-1,25 mm) optimal ausdispergiert. Der Dispergierfortschritt wird dabei mittels einem Interferenzkontrastverfahren (EP-B-0 032 710) verfolgt. Die Endfeinheit ist erreicht, wenn die zu prüfende Oberfläche agglomeratfrei ist. Eine daraus gefertigte Schicht ist hochglänzend und weist eine Grund-rauhigkeit von ≤ 100 nm auf.

Zu der so erhaltenen Dispersion wird 260 g Polyesterpolyurethanklebstoff (Desmocoll 400; Hersteller: Bayer AG) in folgenden Mengen zugesetzt: Proben 1, 2: 260 g, Proben 3, 3a, 4: 298 g, Proben 5, 6: 335 g. Dieser Klebstoff wurde zuvor mit Methylethylketon auf einen Festkörpergehalt von 15% eingestellt. Die Einarbeitung des Klebstoffs erfolgt mittels eines Dissolvers. Die nach diesem Verfahren hergestellte Dispersion zeigt auch nach der Klebstoffzugabe eine hochglänzende und ungestörte Oberfläche.

Die so hergestellte Dispersion wird mit der Gießapparatur aus Schritt a) in einer Schichtdicke von 0,8 µm auf die Schicht A¹ aufgegossen und bei Raumtemperatur getrocknet. Man erhält so den ersten Schichtverbund.

### c) Herstellung der geträgerten Schicht A²

Analog zu Schritt a) wird Schicht A² auf eine ebenfalls 15 µm dicke zweite Polyesterfolie aufgebracht. Die Nachbehandlung erfolgt ebenfalls wie in Schritt a). Man erhält auf diese Weise den zweiten Schichtverbund.

### d) Herstellung des Dreischichtverbunds A¹/B/A²

Die nach den oben genannten Schritten a) und b) hergestellte Schichtverbund läuft trägerseitig zur Aufheizung über eine auf die gewünschte Kaschiertemperatur temperierte Walze. Der zweite Schichtverbund wird mit gleicher Geschwindigkeit wie der erste Schichtverbund so geführt, dass die Schichten B und A² miteinander in Kontakt treten. Gegen die Heizwalze und die über sie laufenden zwei Verbunde wird eine zweite Walze mit einer Kraft von 5 kg/cm Folienbreite gedrückt, so dass in dem Walzenspalt eine innige Verbindung zwischen der Schicht B und der Schicht A² erfolgt.

Anschließend wird die zweite Trägerfolie vom Dreischichtverbund abgezogen und separat aufgewickelt. Der auf der ersten Trägerfolie verbleibende Dreischichtverbund wird ebenfalls aufgewickelt. Probe 3a wird zusätzlich 16 Stunden bei 80°C getempert. Die Haftkraft wird, wie in Beispiel 2 beschrieben, für B/A¹ sowie B/A² bestimmt.

### e) Entfernen des Dreischichtverbundes von der ersten Trägerfolie

Der, wie unter d) beschriebene, geträgerte Dreischichtverbund wird von der Polyesterträgerfolie entfernt, indem der Dreischichtverbund quer zur Folienbahnrichtung mit einer Rasierklinge verletzt wird und dann mit Druckluft, die durch eine Schlitzdüse gepresst wird, abgeblasen wird. Die beschichtete Folie wird dabei kontinuierlich an der Schlitzdüse vorbeigeführt und der abgeblasene Dreischichtverbund wird in Form von Flocken aufgefangen.
Die Dreischichtflocken sind 6 µm dick und zeigen auf beiden Seiten bei senkrechtem Aufblick eine kräftige grüne Farbe mit einem Farbwechsel nach blau, wenn man schräg auf die Flocken schaut.

### f) Mahlen der Dreischichtflocken zu einem Pigment

10 g Cholesterenflocken, hergestellt wie unter e) beschrieben, werden mit 100 g Natriumchlorid gemischt und 6 mal 2 Minuten in einer Schlagmessermühle gemahlen. Nach dem Mahlen wird das Salz mit Wasser herausgewaschen und das Pigment isoliert.

Die Zusammensetzung der jeweiligen Klebeschicht sowie die jeweils verwendeten Kaschierbedingungen und die ermittelten Haftkraftwerte sind für sämtliche Proben in folgender Tabelle 1 zusammengefasst.

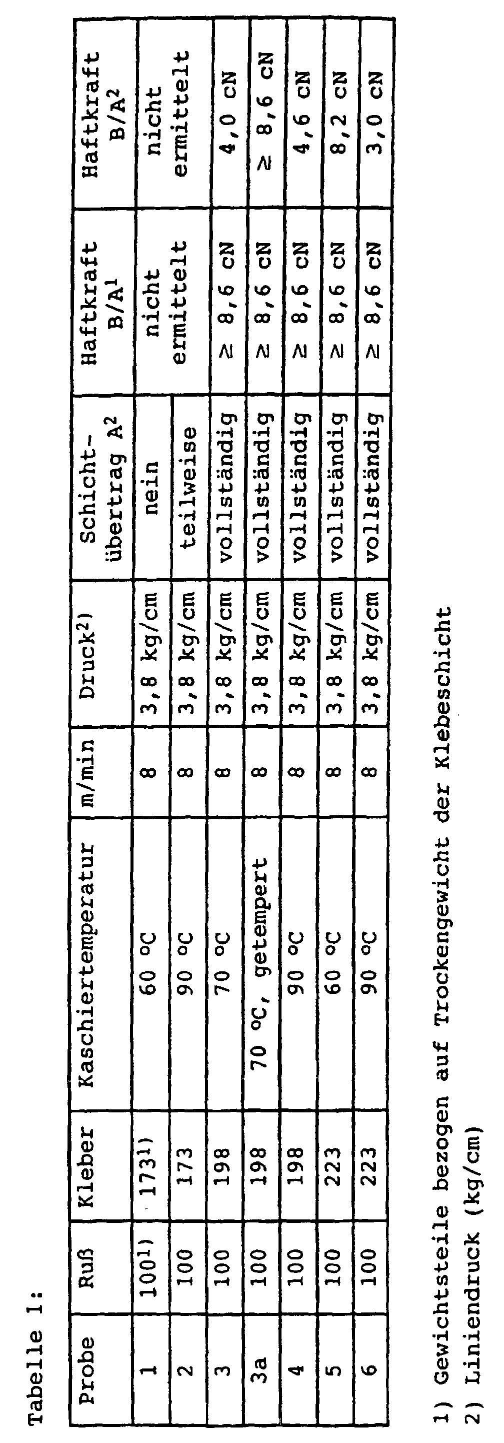

In Probe 1 erfolgte kein und in Probe 2 nur ein teilweiser Schichtübertrag von A² auf den ersten Verbund, während bei allen anderen Proben ein vollständiger Schichtübertrag beobachtet wurde. Beim Mahlen zu Dreischichtflocken (Schritt f) wurde bei den Proben 3 bis 6 nur eine geringfügige Delamination des Verbundes B/A² beobachtet. Probe 3a zeigte praktisch keine Delamination.

Da die Haftkraft der cholesterischen Schicht A¹ bzw. A² auf dem Schichtträger zwischen 0,2 bis 0,5 cN liegt, wird aus den Messwerten ersichtlich, dass die Haftkraft des Dreischichtverbundes untereinander wesentlich höher liegt als die Haftkraft der cholesterischen Schicht auf dem Schichtträger.

Die Messung der Haftkraft wird weiter unten geschildert.

### Beispiel 2: Messung der Haftkraft

Die Messung der Haftkraft wird wie folgt durchgeführt, wobei Bezug genommen wird auf die Figuren 2 bis 5.

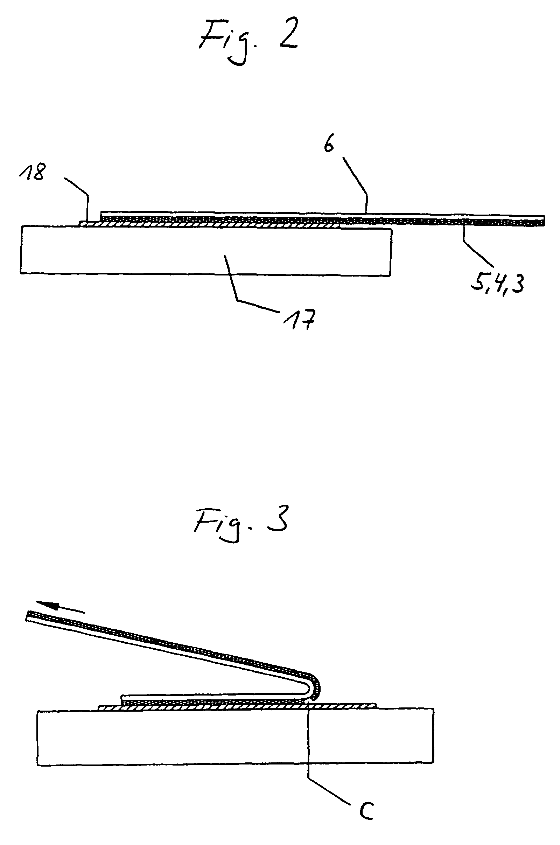

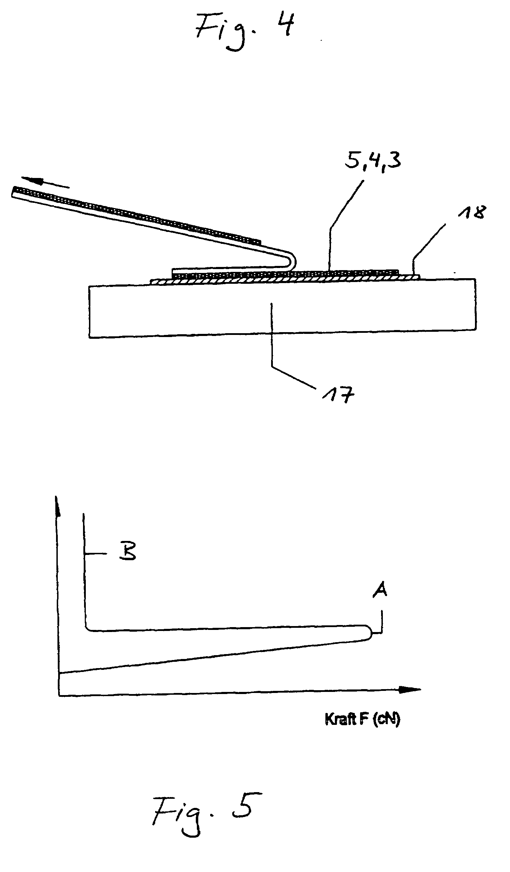

Auf einer ebenen Metallplatte 17 wird ein etwa 5 cm langes Stück Klebeband 18 fixiert. Als Klebeband 18 kann jedes handelsübliche Klebeband verwendet werden, das mit einer PET-Referenzfolie eine Haftkraft unter ansonst gleichen Meßbedingungen von etwa 7,3 bis 7,9 cN, insbesondere etwa 7,6 cN, ergibt. Als PET-Referenzfolie dient hier eine PET-Folie, Typ E2R, der Firma Teijin, Dicke 9 µm, Breite 6,35 mm, Oberflächenrauhigkeit nach DIN 4768: Rz = 0,86 µm, nach DIN 4768/1: Ra = 0,012 µm, nach EP-B-0 032 710 (Interferenzkontrastverfahren): 75 bis 125 nm. Die Klebeschicht ist nach oben gerichtet und von der Platte abgewandt. Der zu messende Verbund, bestehend aus dem Schichtträger 6 und dem Dreischichtverbund 3, 4, 5, wird so aufgebracht, dass eine Cholesterschicht mit der Klebeschicht in Kontakt kommt, wie in Figur 2 dargestellt. Das freie Ende des Verbundes wird nun so abgebogen, dass es einen Winkel von 160o mit der Ebene der Metallplatte bildet. Mit einer konstanten Geschwindigkeit von 0,1 mm pro Sekunde wird das freie gegen das aufgeklebte Bandende in Pfeilrichtung gezogen, wobei die Zugkraft im Band ständig zunimmt, bis der Dreischichtverbund an der Stelle C (Figur 3) aufreißt. In der Figur 5 ist der Kraftverlauf dargestellt und der Punkt A ist der Abrisspeak des Dreischichtverbundes. Im weiteren Verlauf der Messung wird die Haftfestigkeit der Cholesterschicht zum Schichtträger gemessen, wie in Figur 4 dargestellt. Im Kraftdiagramm Figur 5 bedeutet der Punkt B die Haftfestigkeit der Cholesterschicht auf der Folie. Aus dem Diagramm ist ersichtlich, dass die Kraft, die benötigt wird, um die Schicht aufzureißen (Punkt A), um ein Vielfaches größer ist als die Kraft, die aufgewendet werden muss, um die Cholesterschicht vom Schichtträger zu lösen.

Die Zugspannungen im Band (3,4,5,6) werden mit einem hochauflösenden Sensor erfasst und als Abzugskraft in cN mit einem y-T-Schreiber registriert. Im vorliegenden Fall ist maximale Zugfestigkeit durch die Haftung des Klebebandes 17 auf dem Dreischichtverbund 3,4,5 gegeben, welche 8,6 cN beträgt. Höhere Zugkräfte können folglich mit dieser Anordnung nicht gemessen werden.

## Patentansprüche

1. Cholesterisches Schichtmaterial mit der Schichtfolge A¹/B/A², wobei A¹ und A² gleich oder verschieden sind und jeweils mindestens eine gehärtete orientierte cholesterische Schicht umfassen, und B für mindestens eine die Schichten A¹ und A² voneinander trennende Zwischenschicht steht, **dadurch gekennzeichnet, dass** die Schicht B eine Klebeschicht ist; wobei des Schichtmaterial durch Kaschieren erhältlich ist; und wobei die Haftkraft zwischen Klebeschicht B und den Schichten A¹ beziehungsweise A² mindestens um den Faktor 2 größer ist als die Haftkraft der jeweiligen Schicht A¹ beziehungsweise A² auf dem jeweils zugeordneten Schichtträger, der zur Ausbildung der gehärteten Schichten A¹ und A² verwendet wird.

2. Cholesterisches Schichtmaterial nach Anspruch 1, **dadurch gekennzeichnet, dass** die cholesterischen Schichten A¹ und A² jeweils in identischer Weise hergestellt sind.

3. Cholesterisches Schichtmaterial gemäß Anspruch 1 oder 2, **dadurch gekennzeichnet, dass** die Klebeschicht B aus einer wenigsten einen wärme- und/oder druckaktivierbaren Klebstoff umfassenden Masse hergestellt ist.

4. Cholesterisches Schichtmaterial gemäß Anspruch 3, **dadurch gekennzeichnet, dass** der wärme- und/oder druckaktivierbare Klebstoff ausgewählt ist unter lösemittelhaltigem Polyurethanen, lösemittelhaltigen Klebstoffen auf der Basis von Ethylen-Vinylacetat-Mischpolymerisat, Polyacrylaten, Polymethacrylsäureestern, Polyisobutenen, lösemittelhaltigen Klebstoffdispersionen wie Naturkautschuk, Synthesekautschuk auf Polyvinylacetat- oder Polyurethanbasis, Polyvinylalkohol, modifizierter Zellulose sowie Gemischen davon, enthält.

5. Cholesterisches Schichtmaterial gemäß Anspruch 3 oder 4, **dadurch gekennzeichnet, dass** der Klebstoff bei einem Liniendruck im Bereich von 1 bis 30 kg/cm Gießbreite und/oder einer Temperatur im Bereich von 20 bis 120°C aktivierbar ist.

6. Cholesterisches Schichtmaterial gemäß einem der vorherigen Ansprüche, **dadurch gekennzeichnet, dass** die Klebeschicht B mindestens ein anorganisches oder organisches Weiß-, Buntoder Schwarzpigment und, falls transparent, mindestens einen UV-Absorber enthält.

7. Cholesterisches Schichtmaterial gemäß einem der vorherigen Ansprüche, **dadurch gekennzeichnet, dass** die Schichtdicken von A¹ bzw. A² 0,5 bis 20 µm betragen.

8. Cholesterisches Schichtmaterial gemäß einem der vorherigen Ansprüche, **dadurch gekennzeichnet, dass** die Schichtdicke von B 0,3 bis 3 µm beträgt.

9. Cholesterisches Schichtmaterial gemäß einem der vorherigen Ansprüche, wobei A¹ und A² unabhängig voneinander cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Polymer;
d) einem cholesterischen Polymer in einem polymerisierbaren Verdünnungsmittel;
e) mindestens einem cholesterischen Polymer, dessencholesterische Phase durch schnelles Abkühlen unter die Glasübergangstemperatur eingefroren werden kann;
in gehärtetem Zustand enthalten.

10. Verfahren zur Herstellung von cholesterischem Schichtmaterial mit der Schichtfolge A¹/B/A² gemäß einem der Ansprüche 1 bis 9, **gekennzeichnet durch** folgende Schritte:
a) Auftragen einer die Schicht A¹ bildenden ersten Beschichtungsmasse auf einen ersten Schichtträger mit anschließender Härtung der Schicht A¹;
b) Auftragung einer die Klebeschicht B bildenden und wenigstens einen wärme- und/oder druckaktivierbaren Kleber enthaltenden zweiten Beschichtungsmasse auf die geträgerte Schicht A¹ unter Ausbildung des Schichtverbundes A¹/B;
c) Auftragen einer die Schicht A² bildenden dritten Beschichtungsmasse auf einen zweiten Schichtträger mit anschließender Härtung der Schicht A²;
d) Aufkaschieren von A² auf den Schichtverbund A¹/B **durch** in Kontakt bringen der freien Schichtseiten von A² und B unter Einwirkung von Druck und/oder Temperatur unter Ausbildung des Schichtverbundes A¹/B/A²;
e) Ablösen des zweiten Schichtträgers vom Schichtverbund A¹/B/A²; und
f) gegebenenfalls Ablösen des ersten Schichtträgers vom Schichtverbund A¹/B/A².

11. Verfahren gemäß Anspruch 10, **dadurch gekennzeichnet, dass** die Schritte a) und b) in einem Arbeitsgang durch gleichzeitiges oder sequenzielles Auftragen von A¹ und B auf den ersten Schichtträger erfolgen.

12. Verfahren gemäß Anspruch 10, **dadurch gekennzeichnet, dass** der geträgerte Schichtverbund A¹/B mit seiner Schichtträgerseite über eine gegebenenfalls temperierbare Walze (10) geführt wird, welcher gegenüberliegend eine weitere gegebenenfalls temperierbare Walze (11) angeordnet ist, über welche die geträgerte Schicht A² ebenfalls mit ihres Schichtträgerseite geführt wird, wobei der Spalt zwischen den Walzen (10) und (11) durch radiale Verschiebung der beiden Walzen gegeneinander so einstellbar ist, dass der Anpressdruck zwischen geträgertem Schichtverbund A¹/B und geträgerter Schicht A² im Bereich von 1 bis 10 kg/cm Beschichtungsbreite liegt.

13. Verfahren gemäß Anspruch 12, **dadurch gekennzeichnet, dass** der geträgerte Schichtverbund A¹/B und/oder die geträgerte Schicht A² über 1 bis 359° des Umfanges der temperierbaren Walze (10) bzw. der Walze (11) geführt werden.

14. Verfahren gemäß Anspruch 12, **dadurch gekennzeichnet, dass** der geträgerte Schichtverbund A¹/B/A² mindestens 1 Stunde bei Temperaturen von mehr als 20°C getempert wird.

15. Verfahren zur Herstellung von plättchenförmigen cholesterischen Mehrschichtpigmenten der Schichtfolge A¹/B/A², **dadurch gekennzeichnet, dass** man ein gemäß einem der Ansprüche 10 bis 14 hergestelltes cholesterisches Schichtmaterial zu einer Teilchengröße im Bereich von bis zu 200 µm vermahlt.

16. Plättchenförmiges cholesterisches Mehrschichtpigment, erhältlich nach einem Verfahren gemäß Anspruch 15.

17. Plättchenförmiges cholesterisches Mehrschichtpigment, nach Anspruch 16, **gekennzeichnet durch** eine mittlere Teilchengröße im Bereich von 10 bis 50 µm und eine Dicke von 2 bis 10 µm.

18. Zusammensetzungen, enthaltend wenigstens ein Mehrschichtpigment nach einem der Ansprüche 16 und 17.

19. Beschichtungsmittel, enthaltend wenigstens ein Mehrschichtpigment nach einem der Ansprüche 16 und 17.

20. Beschichtungsmittel nach Anspruch 19, das ausgewählt ist unter Effektlacken, -farben oder -folien.

21. Verwendung von Mehrschichtpigmenten nach einem der Ansprüche 16 und 17 oder eines Schichtmaterials nach einem der Ansprüche 1 bis 9 im Fahrzeug- und Fahrzeugzubehörsektor, im EDV-, Freizeit-, Sport- und Spielsektor, als optische Bauelemente wie Polarisatoren oder Filter, im Kosmetikbereich, im Textil-, Leder- oder Schmuckbereich, im Geschenkartikelbereich, in Schreibutensilien oder auf Brillengestellen, im Bausektor, im Haushaltssektor sowie bei Druckerzeugnissen aller Art sowie zur Herstellung von Farben und Lacken.

22. Verwendung von Mehrschichtpigmenten nach einem der Ansprüche 16 und 17 zur fälschungserschwerenden Bearbeitung von Gegenständen.

23. Verwendung einer Zusammensetzung nach Anspruch 18 zur Beschichtung von Gebrauchsgegenständen oder zur Lackierung von Fahrzeugen.

## Claims

1. A cholesteric layered material having the layer sequence A¹/B/A², where A¹ and A² are identical or different and each comprise at least one cured orientated cholesteric layer, B is at least one interlayer separating layers A¹ and A² from one another, wherein layer B is an adhesive layer; wherein the layered material is obtainable by lamination; and wherein the adhesive force between the adhesive layer B and layer A¹ or A² is greater by a factor of at least 2 than the adhesive force of the respective layer A¹ or A² to the corresponding layer support, which is used for forming the cured layers A¹ and A².

2. A cholesteric layered material as claimed in claim 1, wherein each of the cholesteric layers A¹ and A² are produced in an identical manner.

3. A cholesteric layered material as claimed in claim 1 or 2, wherein the adhesive layer B has been produced from a composition comprising at least one heat- and/or pressure-activatable adhesive.

4. A cholesteric layered material as claimed in claim 3, wherein the heat- and/or pressure-activatable adhesive is selected from the group consisting of solvent-containing polyurethanes, solvent-containing adhesives based on ethylene-vinyl acetate copolymers, polyacrylates, polymethacrylates, polyisobutenes, solvent-containing adhesive dispersions, such as natural rubber, synthetic rubber based on polyvinyl acetate or polyurethane, polyvinyl alcohol, modified cellulose and mixtures thereof.

5. A cholesteric layered material as claimed in one of claims 3 or 4, wherein the adhesive can be activated at a line pressure in the range from 1 to 30 kg/cm of cast width and/or at a temperature in the range from 20 to 120°C.

6. A cholesteric material as claimed in any of the preceding claims, wherein the adhesive layer B contains at least an inorganic or organic white, coloured or black pigment and, if transparent, at least a UV absorber.

7. A cholesteric layered material as claimed in one of the preceding claims, wherein the layer thicknesses of A¹ and A² are from 0.5 to 20 µm.

8. A cholesteric layered material as claimed in one of the preceding claims, wherein the layer thickness of B is from 0.3 to 3 µm.

9. A cholesteric layered material as claimed in one of the preceding claims, where A¹ und A² comprise, independently of one another, cholesteric mixtures selected from
a) at least one cholesteric, polymerizable monomer;
b) at least one achiral, nematic, polymerizable monomer and a chiral compound;
c) at least one cholesteric, crosslinkable polymer; or
d) a cholesteric polymer in a polymerizable diluent;
e) at least one cholesteric polymer whose cholesteric phase can be frozen by rapid cooling to below the glass transition temperature,
in the cured state.

10. A process for the production of cholesteric layered material having a layer sequence A¹/B/A² as claimed in one of claims 1 to 9, which comprises the following steps:
a) application of a first coating composition forming the layer A¹ to a first layer support with subsequent curing of the layer A¹;
b) application of a second coating composition which forms the adhesive layer B and comprises at least one heat- and/or pressure-activatable adhesive to the supported layer A¹ with formation of the laminate A¹/B;
c) application of a third coating composition which forms the layer A² to a second layer support with subsequent curing of the layer A²;
d) lamination of A² onto the laminate A¹/B by bringing the free sides of the layers A² and B into contact under the action of pressure and/or temperature with formation of the laminate A¹/B/A²;
e) detachment of the second layer support from the laminate A¹/B/A²; and
f) if desired, detachment of the first layer support from the laminate A¹/B/A².

11. A process as claimed in claim 10, wherein steps a) and b) are carried out in a single operation by simultaneous or sequential application of A¹ and B to the first layer support.

12. A process as claimed in claim 10, wherein the supported laminate A¹/B is fed, with its layer-support side, over a roll (10), which may be heatable and which is opposite a further roll (11), which may be heatable, over which the supported layer A² is likewise passed with its layer-support side, the gap between the rolls (10) and (11 ) being adjustable through radial movement of the two rolls with respect to one another in such a way that the contact pressure between the supported laminate A¹/B and the supported layer A² is in the range from 1 to 10 kg/cm of coating width.

13. A process as claimed in claim 12, wherein the supported laminate A¹/B and/or the supported layer A² is/are passed over from 1 to 359° of the circumference of the heatable roll (10) or the roll (11 ).

14. A process as claimed in claim 12, wherein the supported laminate A¹/B/A² is heated for at least 1 hour at a temperature of above 20°C.

15. A process for the production of platelet-shaped cholesteric multilayered pigments having the layer sequence A¹/B/A², wherein a cholesteric layered material produced as claimed in one of claims 10 to 14 is ground to a particle size in the range of up to about 200 µm.

16. A platelet-shaped cholesteric multilayered pigment obtainable by a process as claimed in claim 15.

17. A platelet-shaped cholesteric multilayered pigment as claimed in claim 16, which has a mean particle size in the range from 10 to 50 µm and a thickness of from 2 to 10 µm.

18. A composition comprising at least one multilayered pigment as claimed in one of claims 16 and 17.

19. A coating composition comprising at least one multilayered pigment as claimed in one of claims 16 and 17.

20. A coating composition as claimed in claim 19, which is selected from effect coatings, paints and films.

21. The use of a multilayered pigment as claimed in one of claims 16 and 17 or of a layered material as claimed in one of claims 1 to 9 in the vehicle and vehicle accessory sector, in the EDP, leisure, sport and games sector, as optical components, such as polarizers or filters, in the cosmetics area, in the textiles, leather or jewelry area, in the gift-article area, in writing utensils or on spectacle frames, in the construction sector, in the domestic sector and in print products of all types, and for the production of paints and coatings.

22. The use of a multilayered pigment as claimed in one of claims 16 to 17 for anticounterfeiting treatment of articles.

23. The use of a composition as claimed in claim 18 for coating utility goods or for painting vehicles.

## Revendications

1. Matériau multicouche cholestérique, ayant une séquence de couches A¹/B/A², A¹ et A² étant identiques ou différents, et représentant chacun une couche cholestérique orientée durcie, et B représentant au moins une couche intermédiaire, séparant l'une de l'autre les couches A¹ et A², **caractérisé en ce que** la couche B est une couche adhésive ; le matériau multicouche pouvant être obtenu par contre-collage ; la force d'adhérence entre la couche adhésive B et les couches A¹ ou A² étant au moins deux fois supérieure à la force d'adhérence de la couche correspondante respectivement A¹ et A² sur le support de couche correspondant, qui est utilisé pour former les couches durcies A¹ et A².

2. Matériau multicouche cholestérique selon la revendication 1, **caractérisé en ce que** chacune des couches cholestériques A¹ et A² est fabriquée d'une manière identique.

3. Matériau multicouche cholestérique selon la revendication 1 ou 2, **caractérisé en ce que** la couche adhésive B est fabriquée à partir d'au moins une masse comprenant un adhésif activable par la chaleur et/ou sous l'effet de la pression.

4. Matériau multicouche cholestérique selon la revendication 3, **caractérisé en ce que** l'adhésif pouvant être activé par la chaleur et/ou sous l'effet de la pression est choisi parmi les polyuréthannes contenant un solvant, les adhésifs contenant un solvant, qui sont à base d'un copolymère éthylèneacétate de vinyle, les polyacrylates, les polyméthacrylates, les polyisobutènes, les dispersions adhésives contenant un solvant telles que le caoutchouc naturel, le caoutchouc synthétique à base de poly(acétate de vinyle) ou de polyuréthanne, le poly(alcool vinylique), la cellulose modifiée ou leurs mélanges.

5. Matériau multicouche cholestérique selon la revendication 3 ou 4, **caractérisé en ce que** l'adhésif peut être activé sous l'effet d'une pression linéaire comprise dans la plage de 1 à 30 kg/cm de largeur de coulée, et/ou à une température comprise dans la plage de 20 à 120°C.

6. Matériau multicouche cholestérique selon l'une des revendications précédentes, **caractérisé en ce que** la couche adhésive B contient au moins un pigment blanc, coloré ou noir, inorganique ou organique et, si elle est transparente, au moins un agent absorbant les UV.

7. Matériau multicouche cholestérique selon l'une des revendications précédentes, **caractérisé en ce que** l'épaisseur de chacune des couches A¹ et A² est de 0,5 à 20 µm.

8. Matériau multicouche cholestérique selon l'une des revendications précédentes, **caractérisé en ce que** l'épaisseur de la couche B est de 0,3 à 3 µm.

9. Matériau multicouche cholestérique selon l'une des revendications précédentes, dans lequel A¹ et A² contiennent, indépendamment l'un de l'autre, et à l'état durci, des mélanges cholestériques qui sont choisis parmi
a) au moins un monomère polymérisable cholestérique ;
b) au moins un monomère polymérisable nématique achiral et un composé chiral ;
c) au moins un polymère réticulable cholestérique ;
d) un polymère cholestérique dans un diluant polymérisable ;
e) au moins un polymère cholestérique dont la phase cholestérique peut être rapidement congelée par refroidissement rapide en dessous de la température de transition vitreuse.

10. Procédé de préparation d'un matériau multicouche cholestérique présentant la séquence de couches A¹/B/A² selon l'une des revendications 1 à 9, **caractérisé par** les étapes suivantes :
a) application d'une première masse de revêtement, formant la couche A¹, sur un premier support de couche, puis durcissement de la couche A¹ ;
b) application d'une deuxième masse de revêtement, formant la couche adhésive B et contenant au moins un adhésif activable à la chaleur et/ou sous l'effet d'une pression, sur la couche supportée A', avec formation du composite multicouche A¹/B ;
c) application d'une troisième masse de revêtement, formant la couche A², sur un deuxième support de couche, puis durcissement de la couche A² ;
d) contre-collage de la couche A² sur le composite multicouche A¹/B par mise en contact des faces libres des couches A¹ et A², sous l'effet de la pression et/ou de la température, avec formation du composite multicouche A¹/B/A² ;
e) détachement du deuxième support de couche d'avec le composite multicouche A¹/B/A² ; et
f) éventuellement, détachement du premier support de couche d'avec le composite multicouche A¹/B/A².

11. Procédé selon la revendication 10, **caractérisé en ce que** les étapes a) et b) sont mises en oeuvre en une passe par application simultanée ou successive de A¹ et de B sur le premier support de couche.

12. Procédé selon la revendication 10, **caractérisé en ce que** le composite multicouche supporté A¹/B est, par sa face dirigée vers le support de couche, envoyé sur un cylindre (10), éventuellement porté à l'équilibre de température, qui est éventuellement disposé en étant opposé à un autre cylindre (11), pouvant éventuellement être porté à l'équilibre de température, et sur lequel est envoyée la couche supportée A², elle aussi par sa face dirigée vers le support de couche, l'écartement entre les cylindres (10) et (11) pouvant être ajusté l'un par rapport à l'autre par un déplacement radial des deux cylindres de telle sorte que la pression de compression entre le composite multicouche supporté A¹/B et la couche supportée A² soit comprise dans la plage de 1 à 10 kg/cm de largeur de revêtement.

13. Procédé selon la revendication 12, **caractérisé en ce que** le composite multicouche supporté A¹/B et/ou la couche supportée A² est guidée sur un angle de 1 à 359° de la circonférence du cylindre (10) ou du cylindre (11) pouvant être porté à l'équilibre de température.

14. Procédé selon la revendication 12, **caractérisé en ce que** le composite multicouche supporté A¹/B/A² est porté pendant au moins 1 heure à l'équilibre de température supérieures à 20°C.

15. Procédé de fabrication de pigments multicouches cholestériques lamellaires correspondant à la séquence de couches A¹/B/A², **caractérisé en ce qu'**on broie un matériau multicouche cholestérique fabriqué selon l'une des revendications 10 à 14 jusqu'à une granulométrie allant jusqu'à 200 µm.

16. Pigment multicouche cholestérique lamellaire pouvant être obtenu par un procédé selon la revendication 15.

17. Pigment multicouche cholestérique lamellaire selon la revendication 16, **caractérisé par** une granulométrie moyenne comprise dans la plage de 10 à 50 µm et une épaisseur de 2 à 10 µm.

18. Compositions contenant au moins un pigment multicouche selon l'une des revendications 16 et 17.

19. Masse de revêtement contenant au moins un pigment multicouche selon l'une des revendications 16 et 17.

20. Masse de revêtement selon la revendication 19, choisie parmi les peintures, encres ou feuilles à effet décoratif.

21. Utilisation de pigments multicouches selon l'une des revendications 16 et 17 ou d'un matériau multicouche selon l'une des revendications 1 à 9 dans le secteur des véhicules et des accessoires pour véhicules, dans le secteur de l'informatique, des loisirs, des sports et des jeux, en tant qu'élément de construction optique, notamment les polariseurs ou les filtres, dans le domaine des produits cosmétiques, dans le domaine des textiles, du cuir et des bijoux, dans le domaine des articles cadeaux, dans les ustensiles d'écriture et sur les montures de lunettes, dans le secteur de la construction, dans le secteur des produits ménagers, ainsi que dans les produits imprimés de tous types, et aussi pour fabriquer des peintures et vernis.

22. Utilisation de pigments multicouches selon l'une des revendications 16 et 17 pour le traitement d'objets destinés à en rendre la falsification plus difficile.

23. Utilisation d'une composition selon la revendication 18 pour revêtir des objets d'usage ou pour peindre la carrosserie de véhicules.
